(19) Europäisches Patentamt

European Patent Office

Office européen des brevets

(11) Publication number: **0 282 110**
**A1**

# EUROPEAN PATENT APPLICATION

(21) Application number: 88200247.0

(51) Int. Cl.⁴: **C09D 3/64** , C08G 63/48

(22) Date of filing: **11.02.88**

(30) Priority: **19.02.87 NL 8700411**

(43) Date of publication of application:
**14.09.88 Bulletin 88/37**

(84) Designated Contracting States:
**AT BE CH DE ES FR GB IT LI NL SE**

(71) Applicant: **STAMICARBON B.V.**
**Mijnweg 1**
**NL-6167 AC Geleen(NL)**

(72) Inventor: **Zonjee, Theodorus**
**Wilhelminastraat 97**
**NL-7721 CG Dalfsen(NL)**

(54) **Paint composition.**

(57) The invention relates to a paint composition comprising
10-30 wt% of an organic solvent
20-60 wt% of an alkyd resin with an average molecular weight between 900 and 10,000 Dalton
20-70 wt% pigments and fillers,
and is characterized in that the alkyd resin is modified with 0.3-2.0 wt% metal ions, based on the alkyd resins, and has an oil length of 65-97%. The invention also relates to a binder for this paint composition.

EP 0 282 110 A1

# PAINT COMPOSITION

The invention relates to a paint composition comprising:
10-30 wt% organic solvent
20-60 wt% alkyd resin with an average molecular weight between 900 and 10,000 Dalton
20-70 wt% pigments and fillers.

Such a paint composition is described in, for example, NL-A-7314965 and is also referred to as 'high-solid' alkyd paint. Much research is being done on alkyd resins that are suitable for paints with a high solids content to thus burden the ecology less with solvents from paints. Normal paints contain 30-50 % solvents.

To obtain a high solids content, the molecular weight of the alkyd resin must preferably be relatively low or it must have a narrow molecular weight distribution. Despite the high solids content, the viscosity may not increase to such an extent that a suitable paint can no longer be produced. However, the disadvantage of the relatively low molecular weight that the flow behaviour of a paint based on such an alkyd resin is such that the paint deeply penetrates porous surfaces, like chipboard and gypsum. A paint with a low solids content with good flow properties, that is, which does not penetrate porous materials, presents the disadvantage that at least two coats of primer must be applied.

The invention provides a solution for this problem.

This is achieved according to the invention by a paint composition comprising
10-30 wt% of an organic solvent
20-60 wt% of an alkyd resin with an average molecular weight between 900 and 10,000 Dalton
20-70 wt% pigments and fillers,
characterized in that the alkyd resin is modified with 0.3-2.0 wt% metal ions, based on the alkyd resin, the alkyd resin having an oil length between 65 and 97 %.

The oil length is defined as the wt% of oil (or fatty acid esterified with glycerol) in the alkyd resin.

Another embodiment of the invention is a binder for a paint composition comprising an alkyd resin with an average molecular weight between 900 and 10,000 Dalton, characterized in that the resin has an oil length between 65 and 97 % and that the resin is modified with a compound containing metal ions such that the resin dissolved in 10-30 wt% solvent has a slimy consistency.

Metal compounds per se are used as fillers, but in that case the alkyd resin is not modified.

As metal ions $Ca^{2+}$, $Zn^{2+}$, $CO^{3+}$, $Mg^{2+}$ or $Al^{3+}$ may be chosen.

Surprisingly, modifying the alkyd resin affects the flow properties of the resin/solvent mixture and the paint composition ultimately to be obtained to such an extent that it becomes sufficiently fluid to produce a smooth coat of paint, but does not penetrate porous surfaces. The particularly positive effect of the great oil length is that the paint dries very well, thus resulting in good mechanical properties. Because of this, chipboard and gypsum walls, for example, can be painted with only two coats: first a primer with a paint composition according to the invention and then a finishing coat. Until now at least three paint coats appeared necessary in practice.

The usual solvents, for example toluene, xylene and other aromatic hydrocarbons, hexane, pentane and other aliphatic hydrocarbons, mixtures of hydrocarbons such as special boiling point spirit (140-180¤C), but also more polar solvents, like $C_2$-$C_8$ alcohols, may be used as solvent for the alkyd resin.

The alkyd resin can be prepared from the usual monomers by first causing one or more polyalcohols, polyacids and oils and/or fatty acids and, in one or more steps, an α, β-unsaturated polycarboxylic acid and, whether or not simultaneously, a calcium compound to react at 220¤C-260¤C.

Pentaerythritol, trimethylolpropane, ethylene glycol, di-and trimers of glycerol, dimer of trimethylolpropane or pentaerythritol, propylene glycol and its oligomeric forms and butanediol, for example, may be used as polyalcohol.

Phthalic acid, isophthalic acid, terephthalic acid, maleic acid, adipic acid, di-and trimeric fatty acids, fumaric acid, sebacic acid and azelaic acid, for example, may be used as polyacids.

The oils and fatty acids used are substantially unsaturated. Linseed oil, soy oil, tall oil fatty acid and wood oil, or mixtures hereof may, for example, be used as oils and fatty acids.

Maleic acid or fumaric acid are preferably used as α,β-unsaturated polycarboxylic acid. Citraconic acid or mesaconic acid may, for example, also be used.

The alkyd resin is prepared with 65-97 % oils or fatty acids based hereon, 1-25 % polyalcohols and 2-25 % polyacids, of which at least 1.5 wt% α,β-unsaturated polycarboxylic acid.

The alkyd resin is preferably prepared with 65-87% oil, 7-25% polyalcohol and 6-25% polyacid.

As metal compounds, oxides and hydroxides and compounds which under the reaction conditions can react to form these, such as calcium sulphate, calcium carbonate, calcium formiate or calcium acetate, may be used.

The metal compound is added in such quantities that 0.3-2.0 wt%, preferably 0.5-1.5 wt% of metal ions are present in the resin.

In particular 0.5-1.0 wt.% of $Ca^{2+}$ ions or 1.0-1.5 wt.% of $Zn^{2+}$ ions are very suitable.

The paint composition further comprises pigments and fillers like titanium dioxide, chalk and talc and can also comprise common additives like inhibitors, setting salts like cobalt octoate, UV stabilizers, etc.

The invention will be elucidated with the following examples without being limited thereto.

Examples I-III

In the manner known in the art 80 parts by weight of tall oil fatty acid, 10 parts by weight of phthalic anhydride and 17.8 parts by weight of pentaerythritol were esterified to form an alkyd resin with an acid number of 10 and a viscosity of 2.2 Pa.s (at 20¤C). Subsequently, three resins were prepared by adding the quantities of maleic anhydride and calcium hydroxide given in Table 1, at a temperature of 180¤C, after which the temperature was raised to 240¤C, which temperature was maintained for 1 hour, with azeotropic distillation of water. The viscosity of the resins thus obtained was between 1 and 5 Pa.s (at 20¤C, 70 parts by weight resin in 30 parts by weight special boiling point spirit). The resin was subsequently cooled and diluted to a solids content of 80%. The oil length of these resins is 80-81.

From each resin a paint composition was prepared, consisting of 27.7 parts by weight of resin, 12.6 parts by weight of titanium dioxide, 31.5 parts by weight of chalk, 13.6 parts by weight of talc, 1.3 parts by weight of driers (siccatives), and 13.2 parts by weight of special boiling point spirit.

The solids contents of the three paint compositions thus obtained were 81%, 80% and 75% at a normal processing viscosity, but with a slimy flow behaviour. Because of the great oil length the paint dries well.

### TABLE 1

| Resin with (wt%) | I | II | III |
|---|---|---|---|
| Maleic anhydride | 1.9 | 2.9 | 2.4 |
| Ca(OH)2 | 1.1 | 1.6 | 1.4 |

Example IV

In an analogous way, a resin was prepared with 2.9 wt.% of maleic acid anhydride, and 1.5 wt.% $Zn^{2+}$ ions (as zincacetate). The resin mixture showed a slimy flow behaviour.

### Claims

1. Paint composition comprising
10-30 wt% of an organic solvent
20-60 wt% of an alkyd resin with an average molecular weight between 900 and 10,000 Dalton
20-70 wt% pigments and fillers,
characterized in that the alkyd resin is modified with 0.3-1.5 wt% $Ca^{2+}$, based on the alkyd resins, and has an oil length between 65 and 97%.

2. Paint composition according to claim 1, characterized in that the alkyd resin has an oil length of 65-87%.

3. Binder for a paint composition comprising an alkyd resin with an average molecular weight between 600 and 10,000 Dalton, characterized in that the resin has an oil length between 65 and 97% and that the resin is modified with metal ions in such a manner that the resin dissolved in 10-30 wt% solvent has a slimy consistency.

4. Binder according to claim 3, characterized in that the resin is modified with 0.3-2.0 wt% metal ions, based on the alkyd resin.

5. Paint composition or binder according to any one of claims 1-4, characterized in that the resin is modified with $Ca^{2+}$, $Zn^{2+}$, $Co^{3+}$, $Mg^{2+}$ or $Al^{3+}$.

6. Paint composition or binder according to any one of claims 1-5, characterized in that the resin is modified with 0.5-1.0 wt.% $Ca^{2+}$.

7. Paint composition or binder according to any one of claims 1-5, characterized in that the resin is modified with 1.0-1.5 wt.% $Zn^{2+}$.

European Patent Office

**EUROPEAN SEARCH REPORT**

Application Number

EP 88 20 0247

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 3, no. 32 (C-40), 17th March 1979, page 54 C 40; & JP-A-54 6024 (NIPPON YUSHI K.K.) 17-01-1979 * Abstract * | 1-7 | C 09 D  3/64 C 08 G  63/48 |
| A | US-A-3 219 604  (W.K.FISCHER) * Claims 1-5; column 1, lines 40-45 * | 1-7 | |
| A | US-A-3 988 290  (M.W.UFFNER) * Claims 1-10; column 3, lines 13-61 * | 1,4-7 | |
| | | | TECHNICAL FIELDS SEARCHED (Int. Cl.4) |
| | | | C 09 D C 08 G C 08 K |

The present search report has been drawn up for all claims

| Place of search | Date of completion of the search | Examiner |
|---|---|---|
| THE HAGUE | 27-05-1988 | DECOCKER L. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................
& : member of the same patent family, corresponding
    document

EPO FORM 1503 03.82 (P0401)